# EUROPEAN PATENT APPLICATION

(11) **EP 2 744 275 A1**
(43) Date of publication of application: **18.06.2014**
(21) Application number: 12821942.5
(22) Date of filing: 05.03.2012
(51) Int. Cl.: H04W 52/02, H04W 88/02, H04W 88/08

(54) **METHOD AND DEVICE FOR POWER SAVING**

(30) Priority: 09.08.2011 CN 201110227591; 07.02.2012 CN 201210026538
(71) Applicant: Beijing Nufront Mobile Multimedia Technology Co., Ltd., Haidian District, Beijing 100084 (CN); Beijing Nufront Mobile Multimedia Tech. Co., Ltd., Beijing 100084 (CN)
(72) Inventor: BAO, Dongshan, Beijing 100084 (CN); YAO, Huijuan, Beijing 100084 (CN); ZHOU, Yubao, Beijing 100084 (CN); REN, Min, Beijing 100084 (CN); YAN, Desheng, Beijing 100084 (CN)
(74) Representative: 2K Patentanwälte Blasberg Kewitz & Reichel
(86) International application number: PCT/CN2012/071921
(87) International publication number: WO 2013/020379

(57) **Abstract**

The present invention discloses a method and device for power saving, receiving the hibernation instruction sent by the network side, one or multiple hardware units inside a station (STA) are turned off to allow the STA to enter a hibernation mode; When STA receives a service instruction from the network side or when the STA has data to be transmitted to a central access point(CAP) of the network side, all the hardware units turned off are turned on to allow the STA to terminate the hibernation mode. Application of the present invention allows within a certain period for a STA remain at a minimal power state, thus conserving power and air interface resources.

## Description

### CROSS-REFERENCE TO RELATED APPLICATION

This application claims the priority of CN Application No. 201110227591.2 filed on August 09, 2011 and titled **"METHOD** AND DEVICE FOR POWER **SAVING"**, which is incorporated herein by reference in its entirety.

This application claims the priority of CN Application No. 201210026538.0 filed on February 07, 2012 and titled **"METHOD** AND DEVICE FOR POWER **SAVING"**, which is incorporated herein by reference in its entirety.

### FIELD OF THE INVENTION

The present invention relates to the field of communication technology, and in particular, to a method and device for power saving.

### BACKGROUND OF THE INVENTION

Currently, in an era of vigorous development on Mobile Internet and Web of Things, wireless systems are used more widely, The service of audio, video, web, constant-rate and variable-rate services have already started to transfer from wired transmission medium to wireless transmission medium.

After the station (STA) in wireless system accesses the central access point (CAP) through network process, it will reside a long time in the network, even if there exists no service transfer currently, STA also need to remain active, thus, it consumes lots of power and wastes air interface resources.

### SUMMARY OF THE INVENTION

Therefore, it is an object of the present invention to provide a method and device of power saving, making STA in a minimum power state within a certain period and thereby saving power and air interface resources.

A brief summary is given below to provide a basic understanding of some aspects of the embodiments disclosed. This section of summary is not to provide a general commentary, or to determine the key/important elements or to describe the protection scopes of these embodiments, but is merely to simply present some concepts, which act as a preamble of the subsequent detailed illustration.

The solution of the invention is achieved in :
A power-saving method, said method comprising:
   Receiving hibernation instruction transmitted by the network side, shutting down one or more hardware units of STA, making STA into the hibernation mode;
   When STA receives the service instruction from the network side or STA is about to send data to CAP on the network side, all the hardware units turned off are turned on to allow STA to terminate the hibernation mode.

In one embodiment, this method further comprising: sending hibernation request to the network side.

Alternatively, said hibernation request carries the reported hibernation parameters.

Alternatively, said hibernation request carries authorized hibernation parameters determined according to the said reported hibernation parameters.

In one embodiment, wherein, said hibernation instruction are determined by the current service condition, system capacity and one or several items of system resource, and they carry the authorized hibernation parameters.

In one embodiment, said hibernation parameters are: hibernation start time, initial hibernation window, monitoring window and change information of subsequent hibernation window that instructs the variation law of subsequent hibernation window;
Said monitoring windows and the said hibernation windows are alternately set.

Alternatively, said hibernation start time instructs the start timing of the said initial hibernation window and it is represented with a frame number.

Alternatively, said hibernation mode comprising:
Turn off one or more said hardware units in each said hibernation window and turn on the monitoring unit in each said monitoring window to make STA monitor the service instruction said above.

Alternatively, said service instruction is sent by the nearest window when the data sent from CAP cache to STA reaches the predetermined threshold on the network side.

In one embodiment, further comprising: After correctly receiving the said hibernation instruction, acknowledgements is sent to the network side.

A power-save terminal-side device, said device comprising:
Reception unit of hibernation instruction, used for receiving hibernation instruction sent by network-side;
Hibernation execution unit, used for turning off one or more hardware units and make STA enter hibernation mode when Reception unit of hibernation instruction receives hibernation instruction sent from the network side;
Execution activation unit, used for turning on all hardware units that have been turned off and make STA end its hibernation mode when STA receives service instruction sent by network side or STA is about to send data to CAP on network side.

In one embodiment, said device further comprising:
Hibernation request unit, used for sending hibernation request to network side.

Alternatively, said hibernation request unit comprising:
Said hibernation request unit comprising:
   Determining sub-unit of hibernation parameters, used for determining hibernation parameters that are to be reported;
   Sending sub-unit of hibernation request, used for sending hibernation request that carries reported hibernation parameters to network side.

Alternatively, said Reception unit of hibernation instruction comprising:
Reception sub-unit of hibernation instruction, used for receiving hibernation instruction sent by the network side.

Analytical sub-unit of hibernation instruction, used for analyzing authorized parameters carried in the hibernation instruction mentioned above.

In one embodiment, said Reception unit of hibernation instruction comprising:
Reception sub-unit of hibernation instruction, used for receiving hibernation instruction sent by the network side.

Analytical sub-unit of hibernation instruction, used for analyzing authorized parameters carried in the hibernation instruction mentioned above.

In one embodiment, said hibernation parameters are: hibernation start time, initial hibernation window, monitoring window and change information of subsequent hibernation window that instructs the variation law of subsequent hibernation window;
The said monitoring windows and the said hibernation windows are alternately set.

Alternatively, said hibernation start time instructs start timing of said initial hibernation window and it is represented with a frame number.

Alternatively, said Hibernation execution unit comprising:
Hibernation execution sub-unit, used for turning off one or more hardware units of STA in each hibernation window mentioned above;
Monitoring sub-unit, used for turning on monitoring unit of STA in each monitoring window and make STA monitor service instruction sent by network side.

In one embodiment, said device further comprising:
Confirmation unit, used for sending acknowledgment message to network side after Reception unit of hibernation instruction receives hibernation instruction correctly.

A power-save network -side device, said device comprising :
Hibernation instruction unit, used for sending hibernation instruction to terminal side;
Activation instruction unit, used for sending service instruction to terminal side.

In one embodiment, said device further comprising:
Reception unit of hibernation request, used for receiving hibernation request sent by terminal side.

Alternatively, said Reception unit of hibernation instruction comprising:
Reception sub-unit of hibernation request, used for receiving hibernation request sent by the terminal side;

Analytical sub-unit of hibernation request, used for analyzing reported hibernation parameters carried in the hibernation request mentioned above.

In one embodiment, said Hibernation instruction unit comprising:
Determining sub-unit of hibernation parameters, used for determining authorized hibernation parameters according to the reported hibernation parameters carried in hibernation request;

Sending sub-unit of hibernation instruction, used for sending hibernation instruction that contain hibernation parameters to terminal side.

Alternatively, said hibernation instruction unit comprising:
Analytical sub-unit, used for analyzing STA's current service conditions, system capacity and one or several items of system resources.

In one embodiment, said hibernation parameters are: hibernation start time, initial hibernation window, monitoring window and change information of subsequent hibernation window that instructs the variation law of subsequent hibernation window;
Said monitoring windows and the said hibernation windows are alternately set.

Alternatively, said hibernation start time instructs start timing of said initial hibernation window and it is represented with a frame number.

Alternatively, said activation instruction unit comprising:
Judgment sub-unit of cache state, used for judging if data sent from CAP cache to STA reaches predetermined threshold.

Sending sub-unit of service instruction, used for sending service instruction in nearest monitoring window to network side when Judgment sub-unit of cache state judges that data sent from CAP cache to STA reaches predetermined threshold.

In one embodiment, said device further comprising:
Reception confirmation unit, used for receiving acknowledgment message sent by terminal side after it receives said hibernation instruction correctly.

A method for power saving, this method comprising :
Generating hibernation request;
Sending said hibernation request, make receiving terminal received said hibernation request to transmit hibernation instruction for going into hibernation mode.

Alternatively, said hibernation request carried reported hibernation parameters; Alternatively, said hibernation request encapsulated in hibernation request frame.

A method for power saving, this method comprising :
Generating hibernation request;
Sending said hibernation request, make receiving terminal received said hibernation request to turn off one or more said hardware units, goes into hibernation mode.

Alternatively, said hibernation instruction carried authorized hibernation parameters.

Alternatively, said hibernation instruction is hibernation response frame.

Alternatively, said hibernation parameters are: hibernation start time, initial hibernation window, monitoring window and change information of subsequent hibernation window that instructs the variation law of subsequent hibernation window.

A method for power saving, this method comprising :
Generating service instruction;
Sending said service instruction, make receiving terminal received said service instruction to turn on all hardware units being turned off, terminate hibernation mode.

Alternatively, said service instruction encapsulated in downlink traffic indication frame.

It can clearly be seen in the present invention method and device of power saving, one or more hardware units of STA can be turned off according to the hibernation instruction transmitted by the network side, when STA receives operational instruction from the network side or STA is about to send data to CAP on the network side, all the hardware units turned off are turned on to allow STA to terminate the hibernation mode, so allows STA to remain at a minimal power state within a certain period, thus conserving power and air interface resources.

To attain the above and related objects, one or more embodiments include the features that will be illustrated in detail below and specifically recited in the claims. The following illustration and drawings illustrate some exemplary aspects in detail; moreover, it only indicates some of the various modes in which the principle of each embodiment may be applied. Other benefits and novel features will be apparent from the following detailed illustration in conjunction with the drawings, and all the embodiments disclosed intend to contemplate all these aspects and their equivalents.

### BRIEF DESCRIPTION OF THE DRAWINGS

Fig. is a flow chart of the power-saving method in present invention;
Fig.2 is a flow chart of the power-saving method in Embodiment 1 of present invention;
Fig.3 is a frame structure diagram of the hibernation request frame in Embodiment 1 of present invention;
Fig.4 is a frame structure diagram of the hibernation response frame in Embodiment 1 of present invention;
Fig.5 is a frame structure diagram of the downlink operational instruction frame in Embodiment 1 of present invention;
Fig.6 is a flow chart of the power-saving method in Embodiment 2 of present invention;
Fig.7 is a flow chart of the power-saving method in Embodiment 3 of present invention;
Fig.8 is a flow chart of the power-saving method in Embodiment 4 of present invention;
Fig.9is a flow chart of another power-saving method in present invention;
Fig.10 is a structure diagram of the terminal side power-saving device in present invention;
Fig.11 is a structure diagram of the terminal side power-saving device in Embodiment 5 of present invention;
Fig. 12 is a structure diagram of the network side power-saving device in present invention;
Fig. 13 is a structure diagram of the network side power-saving device in Embodiment 6 of present invention;
Fig. 14 is a structure diagram of the network side power-saving device in Embodiment 7 of present invention;

### DETAILED DESCRIPTION OF THE EMBODIMENTS

The description below and accompanying drawings fully illustrate specific embodiments of the invention, to enable one skilled in the art to implement the embodiments. Modifications, such as structural, logical, electrical and process modifications, can be made in other embodiments. The embodiments only represent some possible variations. Individual components or functions are optional and the operation order is variable, unless it is otherwise stated specifically. A part and certain feature of some embodiments may be included in or replaced by a part and certain feature of other embodiment. The scope of the embodiments of the invention includes the whole scope of the claims and all obtainable equivalents thereof. Herein, these embodiments of the invention may be individually or generally represented by the term "invention" for the sake of convenience; moreover, if more than one invention is disclosed actually, it is not intended automatically to limit the application scope to any individual invention or inventive concept.

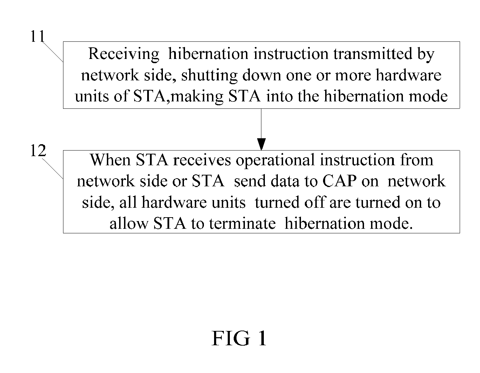

Fig.1 is a flow chart of the power-saving method in present invention, which includes:

Step 11: receiving hibernation instruction transmitted by the network side, shutting down one or more hardware units of STA, making STA into the hibernation mode.

Hereby, the "one or more hardware units" includes but not limited to hardware components, circuit, integration module, etc.

When STA goes into the hibernation mode, it can't send or receive data, namely, it is in a minimum power state within a certain period.

Step 12: when STA receives operational instruction from the network side or STA is about to send data to CAP on the network side, all the hardware units turned off are turned on to allow STA to terminate the hibernation mode.

After STA ends its hibernation mode, it will enter the active mode, conduct normal communication and be in a full power state.

It can clearly be seen in the power-saving method of the present invention, one or more hardware units of STA can be turned off according to the Hibernation directions transmitted by the network side, when STA receives operational instruction from the network side or STA is about to send data to CAP on the network side, all the hardware units turned off are turned on to allow STA to terminate the hibernation mode, by the method above, we make STA in a minimum power state within a certain period and therefore save power and air interface resources. On the other hand, one or more hardware units are turned off in the power-saving method of present invention and STA will be in a state in which it can't conduct normal communication, it saves power at STA level, can be simply performed and has good power-saving effect.

After STA enters hibernation mode, CAP only need to maintain the status information of STA, for example, this STA has registered and entered hibernation mode, thus reducing the air interface resources service for this STA.

The following list some embodiments of the present invention, in these optional embodiments we assume that the terminal-side subject that performs the power saving method is part of the STA on terminal side and the network-side subject that performs the power saving method is part of the CAP on network side. Therefore, all the descriptions in the following optional embodiment are said by regarding STA and CAP as subjects, but these optional embodiments can't limit the condition that the subjects which execute power-saving method on terminal side are independent parts outside of STA, or the subjects that execute power-saving method on network side are independent parts outside of CAP.

In the following optional embodiments of present invention, assuming that the application scenario is in enhanced ultrahigh-speed wireless LAN technology (EUHT) system, EUHT significantly increases the system capacity by multi-channel transmission, multi-user multiple-input multiple-output (MU-MIMO) technology, etc. By using centralized dispatching mechanism, EUHT avoids collision and avoidance of air interfaces and it can provide differentiated services to different service. EUHT system can provide at least a throughout capacity of 1.2Gbps to meet the requirements of the current users on the data transfer rate of wireless network. Here, the EHUT system is only one example of the application scenarios, the method of present invention actually can be applied in other wireless systems.

### Embodiment 1

In embodiment 1, for example, STA triggers hibernation operation and CAP triggers activation, when STA doesn't have an uplink transmission in a period, it can trigger the hibernation operation.

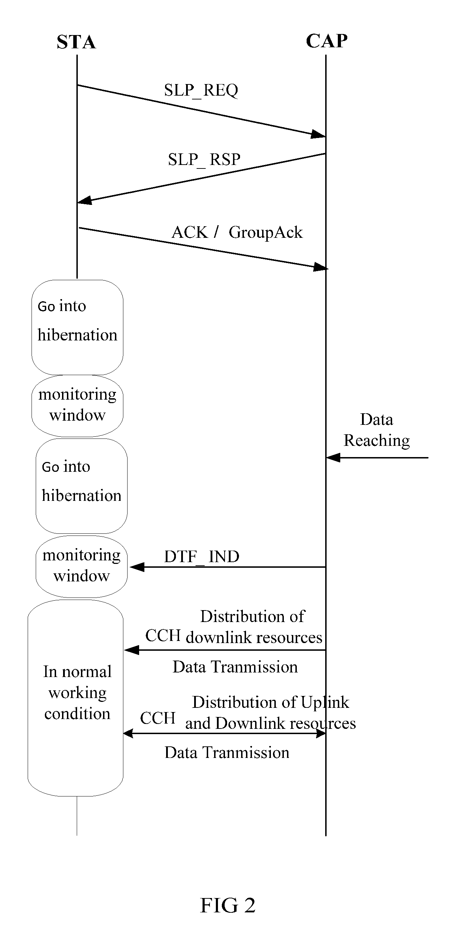

Fig.2 is a flow chart of the power-saving method in Embodiment 1 of present invention, which includes:
Step 21: STA sends hibernation request to CAP.

At this step, the hibernation request is achieved by being encapsulated in the hibernation request frame (SLP_REQ), which carries reported hibernation parameters. The specific values for reported hibernation parameters of STA can be selected from pre-configured values in the system.

Specifically, the reported hibernation parameters above are: hibernation start time, initial hibernation window, monitoring window and change information of subsequent hibernation window that instructs the variation law of subsequent hibernation window.

In the embodiments of present invention, the hibernation window and monitoring window are set alternately, and the size of monitoring is fixed. One hibernation window and one monitoring window is called a hibernation cycle, and in each cycle it defaults that the hibernating window in the front and the monitoring window in the back.

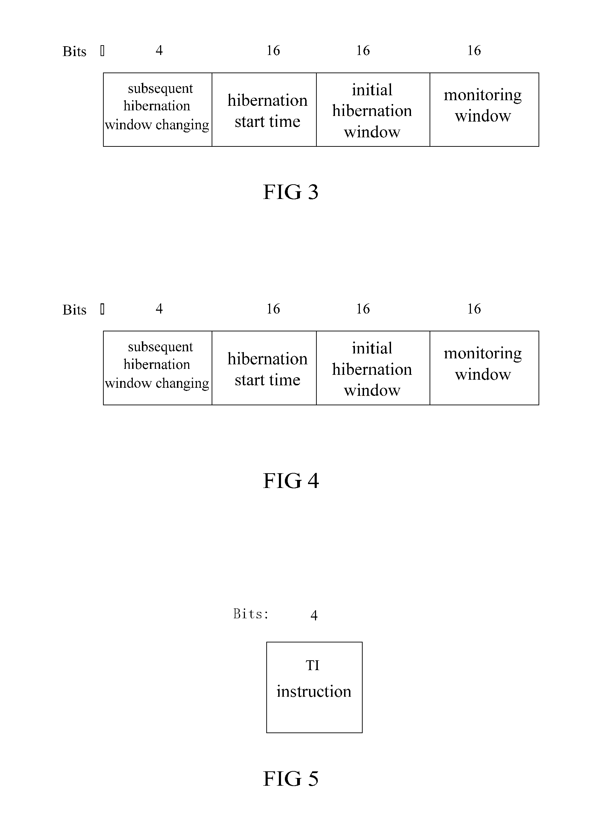

Fig.3 is a frame structure diagram of the hibernation request frame in Embodiment 1 of present invention. The numbers on the top side of this figure represent the possible occupied bit number of each field in the hibernation request frame.

The hibernation start time field mentioned above, instructs the start time of initial hibernation window requested by STA and it is indicated by frame number.

The initial hibernation window field mentioned above, instructs the size of initial hibernation window requested by STA and it's in units of time.

The monitoring window field mentioned above, instructs the size of monitoring window requested by STA and it's in units of time.

The changing field of subsequent hibernation window mentioned above, instructs the variation law of the subsequent hibernation window requested by STA relative to the initial hibernation window, the variation field here can be doubled and also can change according to a function relationship, etc. Specifically, the changing field of subsequent hibernation window can be defined by different values to instruct the variation law of subsequent hibernation window.

In Embodiment 1, the size of hibernation window requested by STA is fixed.

Step 22: CAP sends hibernation instruction to STA.

At this step, the hibernation instruction are achieved by hibernation response frame (SLP_RSP), therein, it carries authorized hibernation parameters determined by the reported hibernation parameters. There are many methods to determine authorized hibernation parameters by CAP and here lists the following examples:
① If the hibernation parameters reported by STA aren't within the pre-configured value range of system, CAP can adjust the hibernation parameters reported by STA;
② If there're multiple STAs requesting hibernation at the same time, CAP can adjust these hibernation parameters reported by STA, making these STAs enter hibernation mode as much as possible to the same hibernation parameters, thus it's more conducive to the CAP management.

The authorized hibernation parameters mentioned above specifically are: hibernation start time, initial hibernation window, monitoring window and change information of subsequent hibernation window that instructs the variation law of subsequent hibernation window.

Fig.4 is a frame structure diagram of the hibernation response frame in Embodiment 1 of present invention. The numbers on the top side of this figure represent the possible occupied bit number of each field in this frame.

The hibernation start time field mentioned above, instructs the start time of initial hibernation window allowed by CAP and it is indicated by frame number.

The initial hibernation window field mentioned above, instructs the size of initial hibernation window allowed by CAP and it's in units of time.

The monitoring window field mentioned above, instructs the size of monitoring window allowed by CAP and it's in units of time.

The changing field of subsequent hibernation window mentioned above, instructs the variation law of the subsequent hibernation window allowed by CAP relative to the initial hibernation window, the variation field here can be doubled and also can change according to a function relationship, etc. Specifically, the changing field of subsequent hibernation window can be defined by different values to instruct the variation law of subsequent hibernation window.

In Embodiment 1, the size of hibernation window allowed by CAP is fixed.

As an optional method, after STA receives hibernation response accurately, it can return acknowledgement to CAP, the acknowledgement here may be single acknowledgement (ACK) or Group acknowledgement (GroupAck). The embodiment of present invention provides a way of group acknowledgement (GroupAck), the Groupack includes the instruction bit of management control frame and the bitmap corresponding to different service flow of the same user, the STA here can fill the instruction that instructs whether the hibernation response frame is received correctly or not, and then during the transmission based on service flow, STA can send the acknowledgements corresponding to different service flow together to CAP by bitmap in GroupAck frame.

Step 23: STA shuts down one or more hardware units in itself and enters the hibernation mode.

At this step, the hibernation mode includes: shutting down one or more hardware units, turning on monitoring unit in the monitoring window to monitor the service instruction transmitted by CAP. The entering hibernation mode showed in Fig.2 represents the hibernation window.

Here, the turned on monitoring unit may be included in the hardware units which are turned off when entering the hibernation mode, or it may be the unit that need to be turned on when monitoring. The monitoring unit may include but not be limited to the hardware components, circuit, integration module and so on that achieve monitoring function.

Step 24: STA judge that if monitoring the service instruction transmitted by CAP at the monitoring window, if yes, it executes step 25, or else it remains in hibernation mode.

At this step, when CAP is about to send data to STA that has already entered hibernation mode, it can cache the sending data first, when the cache data reaches the pre-configured threshold, CAP would send service instruction to STA at the nearest monitoring window.

After the cache data reaches the pre-configured threshold and CAP sends service instruction to STA, it has to wait for STA a period to end its hibernation mode, during which CAP can continue to cache the data that's about to be sent to STA.

The encapsulation of service instruction is achieved in the downlink service indicative frame (DTF_IND).

Fig.5 is a frame structure diagram of the downlink operational instruction frame in Embodiment 1 of present invention, the numbers on the top side of this figure represent the possible occupied bit number of each field in this frame.

The service instruction (TI) field mentioned above, instructs that if there is any data of current STA on CAP side. Specifically, it can define specific value in TI to show if there exists any data of current STA.

Step 25: STA turns on all the hardware units that have been turned off and ends the hibernation mode.

The activation mode in Fig.2 is a normal operational state that STA enters, CAP can instruct the distributed downlink resources by control channel (CCH), and send the cached data to STA in caching turn on these downlink resources, The DATA shown in Fig.2 is that received by STA from CAP.

### Embodiment 2

In Embodiment 2, we still take triggering hibernation operation by STA and triggering activation operation by CAP as an example.

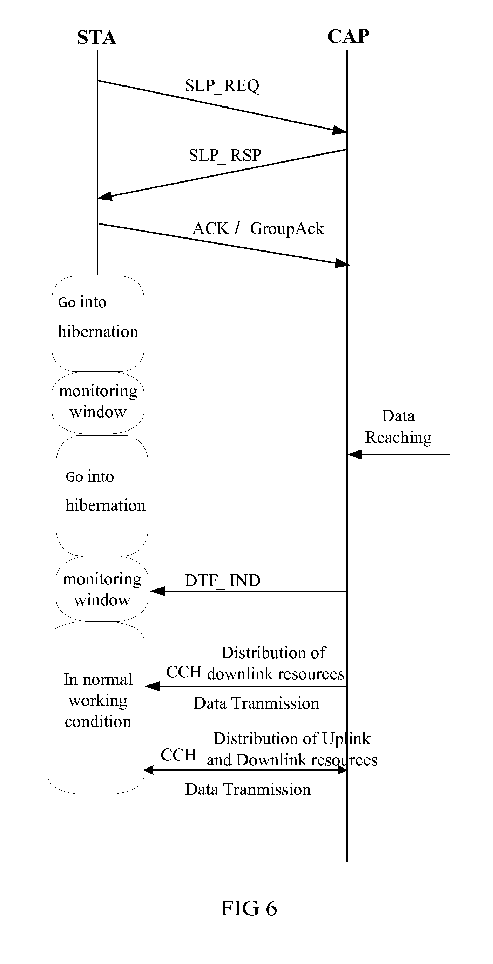

Fig.6 is a flow chart of the power-saving method in Embodiment 2 of present invention, which includes:
Step 61: STA sends hibernation request to CAP.

At this step, the hibernation request is achieved by being encapsulated in the hibernation request frame, wherein, it carries the reported hibernation parameters which specifically are: hibernation start time, initial hibernation window, monitoring window and change information of subsequent hibernation window that instructs the variation law of subsequent hibernation window. The hibernation frame structure in Embodiment 2 is the same as that in Fig.3.

In Embodiment 2, the hibernation windows requested by STA are in a doubled relationship. To be sure, besides this doubled relationship, other function relationships also can be set provided that it can instruct the variation of the hibernation windows.

Subsequent hibernation windows are larger than the initial hibernation windows, that is to reduce STA's times of monitoring service instruction when there exists no data transmission, thus to further save power.

Based on the doubled relationship in Embodiment 2, the system can pre-configures the upper threshold for the hibernation windows, and when reaching this upper threshold, the size of hibernation windows keeps constant.

In Embodiment 2, one hibernation window together with one monitoring window is called a hibernation circle and in each circle, it defaults that the hibernation window is in the front and the monitoring window is in the back.

Step 62: CAP sends hibernation instruction to STA.

At this step, the hibernation instruction is achieved by being encapsulated in the hibernation response frame, wherein, it carries the authorized hibernation parameters determined by the reported hibernation parameters which specifically are: hibernation start time, initial hibernation window, monitoring window and change information of subsequent hibernation window that instructs the variation law of subsequent hibernation window. The hibernation response frame structure in Embodiment 2 is the same as that in Fig.4.

In Embodiment 2, CAP allows the doubled relationship between the hibernation windows' sizes.

Optionally, after STA correctly receives the hibernation response frame, it can feed back ACK or GroupAck to CAP.

Step 63: STA shuts down one or more hardware units in itself and enters hibernation mode.

Step 64: STA judges that if monitoring the service instruction transmitted by CAP at the monitoring window, if yes, it executes step 65, or else it remains in hibernation mode.

At this step, the encapsulation of service instruction is achieved in the downlink service indicative frame. The frame structure of downlink service instruction frame in Embodiment 2 is the same as that in Fig.5.

The way of sending service instruction by CAP is same as that in Embodiment 1.

Step 65: STA turns on all the hardware units that have been turned off and ends the hibernation mode.

The activation mode in Fig.6 is a normal operational state that STA enters, CAP can instruct the distributed downlink resources by control channel (CCH), and send the cached data to STA in caching turn on these downlink resources, The DATA shown in Fig.6 is that received by STA from CAP.

In Embodiment 1 and Embodiment 2 which are mentioned above, after STA enters the normal operation state, besides CAP sends the cached data to STA, STA also can normally interchange data with CAP and CAP can instruct the distributed uplink and downlink resources by control channel (CCH), STA can send data to CAP by the distributed uplink resources and receive data from CAP by the distributed downlink resources.

### Embodiment 3

In Embodiment 3, we take triggering hibernation operation by STA and triggering activation operation by STA as an example.

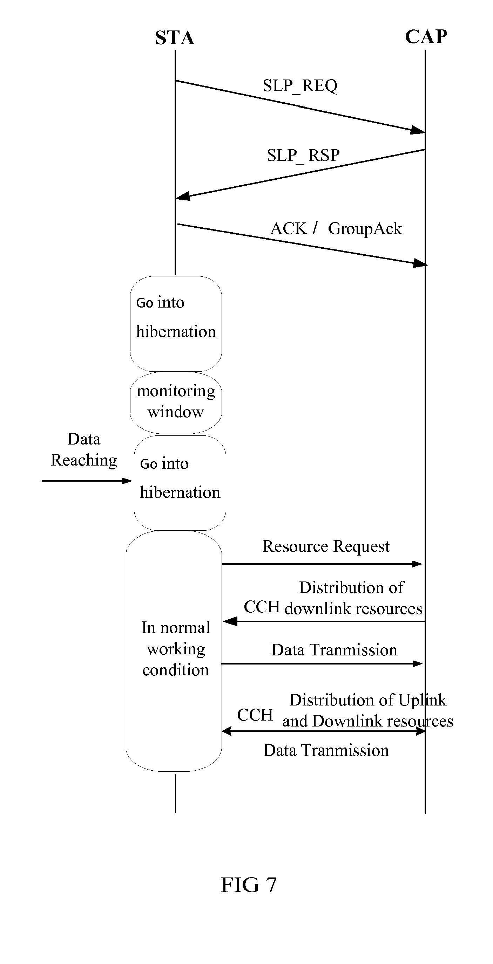

Fig.7 is a flow chart of the power-saving method in Embodiment 3 of present invention, which includes:

Step 71: STA sends hibernation request to CAP.

At this step, the hibernation request is achieved by being encapsulated in the hibernation request frame, wherein, it carries the reported hibernation parameters which specifically are: hibernation start time, initial hibernation window, monitoring window and change information of subsequent hibernation window that instructs the variation law of subsequent hibernation window. The hibernation request frame structure in Embodiment 3 is the same as that in Fig.3.

In Embodiment 3, the size of the requested hibernation windows by STA are fixed. One hibernation window and one monitoring window are called a hibernation circle and in each circle it defaults that the hibernation window is in the front and the monitoring window is in the back.

Step 72: CAP sends hibernation instruction to STA.

At this step, the hibernation instruction is achieved by being encapsulated in the hibernation response frame, wherein, it carries the authorized hibernation parameters determined by the reported hibernation parameters which specifically are: hibernation start time, initial hibernation window, monitoring window and change information of subsequent hibernation window that instructs the variation law of subsequent hibernation window. The hibernation response frame structure in Embodiment 3 is the same as that in Fig.4.

Optionally, after STA correctly receives the hibernation response frame, it feeds back ACK or GroupAck to CAP.

Step 73: STA shuts down one or more hardware units in itself and enters hibernation mode.

Step 74: STA judges that if there is any data in itself to be sent to CAP, if yes, it executes step 75, or else it remains in hibernation mode.

At this step, when STA has a uplink data transmission, it can actively end its hibernation mode and send resources request to CAP to obtain uplink transmission resources used for sending uplink data.

Step 75: STA turns on all the hardware units that have been turned off and ends the hibernation mode.

The activation mode in Fig.7 is a normal operational state that STA enters, STA can send resources request to CAP to obtain uplink resources distributed by CAP and CAP can instruct the distributed uplink resources by control channel (CCH), and STA can send data to CAP by these uplink resources, The DATA shown in Fig.7 is that sent from STA to CAP.

In this embodiment, although the example is that STA ends its hibernation mode when there is data transmission in itself, in fact, since the monitoring window has been already set, if it is earlier for STA to monitor the service instruction sent by CAP than the monitoring windows, STA also can turn on all the hardware units that have been turned off and end the hibernation mode.

### Embodiment 4

In Embodiment 4, the example is that we trigger the hibernation operation by CAP and trigger activation by STA, and CAP can actively request STA to enter hibernation mode according STA's operation state.

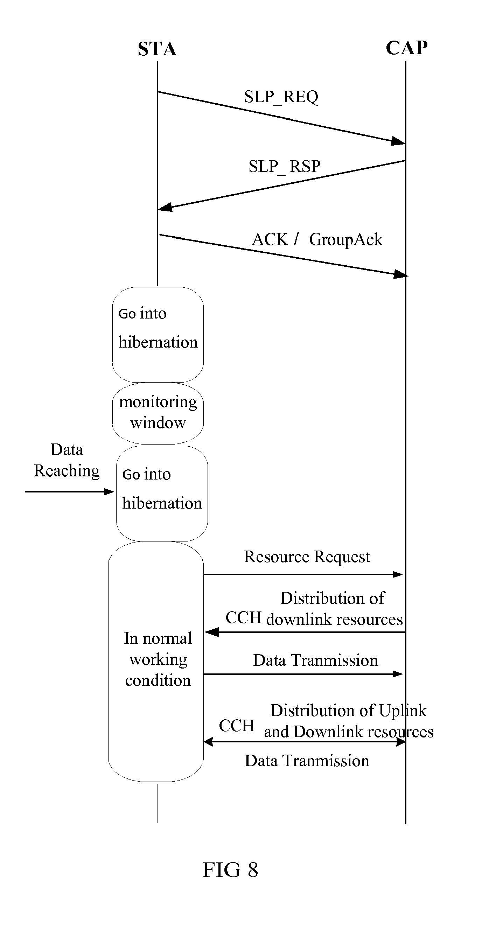

Fig.8 is a flow chart of the power-saving method in Embodiment 4 of present invention, which includes:
Step 81: CAP sends hibernation instruction to STA.

At this step, according to current service condition, system capacity and one or several items in the system resources of STA, CAP decides whether to send hibernation instruction or not. For example, provided that there exists no data interchange between CAP and STA in a period and the current system's resources are very limited, CAP can actively send hibernation instruction to STA and request STA to enter hibernation mode.

At this step, the hibernation instruction is achieved by hibernation response frame and it carries authorized hibernation parameters which can be selected from the pre-configured values of system and other factors can be further considered, for example, if CAP finds that there are multiple STAs that need to enter hibernation mode currently, then we select the same authorized hibernation parameters as much as possible for these STAs.

The hibernation response frame structure in Embodiment 4 is the same as that in Fig.3.

The authorized hibernation parameters mentioned above are carried by the following fields: hibernation start time field, initial hibernation window field, monitoring window field and variation field of subsequent hibernation window.

In Embodiment 4, CAP allows the hibernation windows in a doubled relationship. Of course, besides this doubled relationship, we can also set other function relationships so long as to instruct the variation of these hibernation windows.

The hibernation windows are enlarged to reduce STA's times of monitoring service instruction when there exists no data transmission, thus to further save power.

Based on the doubled relationship in Embodiment 4, the system can pre-configures the upper threshold for the hibernation windows, and when reaching this upper threshold, the size of hibernation windows keeps constant.

In Embodiment 4, one hibernation window together with one monitoring window is called a hibernation circle and in each circle, it defaults that the hibernation window is in the front and the monitoring window is in the back.

Optionally, after STA correctly receives the hibernation response frame, it can feed back ACK or GroupAck to CAP.

Step 82: STA shuts down one or more hardware units in itself and enters hibernation mode.

Step 83: STA judges that if there is any data in itself to be sent to CAP at the monitoring window, if yes, it executes step 84, or else it remains in hibernation mode.

Step 84: STA turn on all the hardware units that have been turned off and ends the hibernation mode.

The activation mode in Fig.8 is a normal operational state that STA enters, STA can send resources request to CAP to obtain uplink resources and CAP can instruct the distributed uplink resources by control channel (CCH), and STA can send data to CAP by these uplink resources, The data shown in Fig.8 is that sent from STA to CAP.

In this embodiment, although the example is that STA ends its hibernation mode when there is data transmission in itself, in fact, since the monitoring window has been already set, if it is earlier for STA to monitor the service instruction sent by CAP than the monitoring windows, STA also can turn on all the hardware units that have been turned off and end the hibernation mode.

In Embodiment 3 and Embodiment 4 which are mentioned above, after STA ends its hibernation mode, besides STA sends the uplink data to CAP, STA also can normally interchange data with CAP and CAP can instruct the distributed uplink and downlink resources by control channel (CCH), STA can send data to CAP by the distributed uplink resources and receive data from CAP by the distributed downlink resources.

In the Embodiment 1 to 3 mentioned above, STA may request hibernation not actively and wait for CAP to actively send hibernation instruction, then it enters hibernation mode. The Embodiment 4 mentioned above, STA can actively request hibernation to CAP.

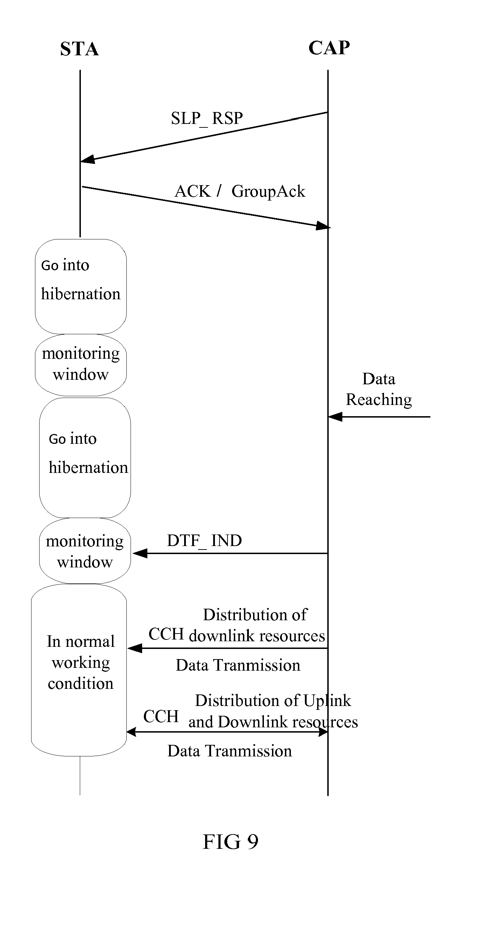

Besides the specific conditions in embodiments mentioned above, it may also include the condition in Fig.9, wherein, CAP triggers hibernation and activation, here the specific process will not be said any more.

In the embodiments mentioned above, when the hibernation is triggered by CAP, within the set frame number after CAP sending the hibernation instruction, if CAP doesn't receive ACK or GroupAck fed back by STA, it can send the hibernation instruction again and again until reaching the setting time, then CAP regards the trigger as a failure and it can start a new process to trigger hibernation. If the number of times to continuously send hibernation instruction for the same STA exceeds the set times, then CAP thinks the STA is abnormal and this STA will be deleted from the activity list.

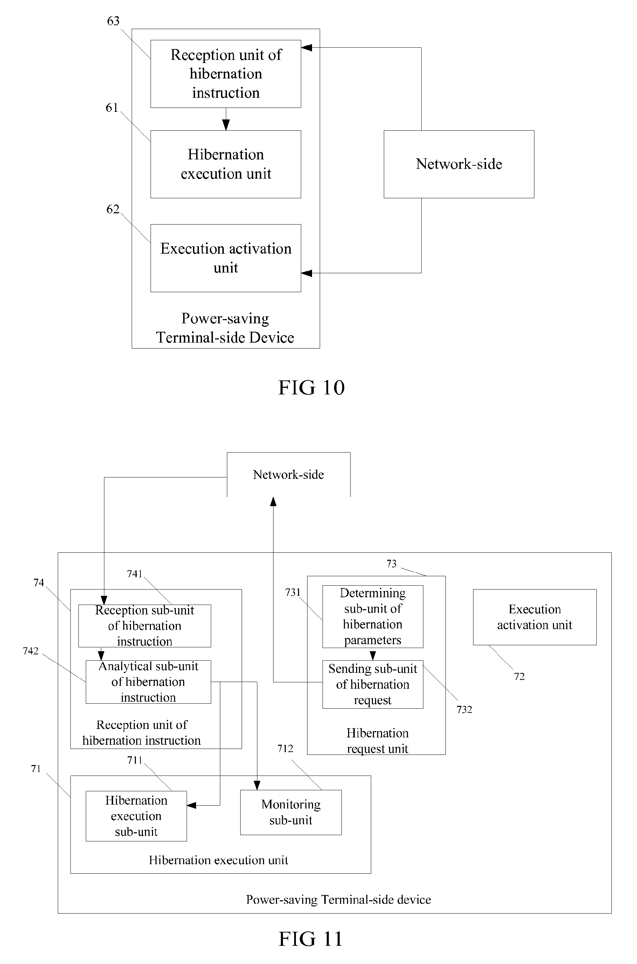

Fig. 10 is a structure diagram of the terminal-side device that saves power in present invention, wherein, its characteristic is, this device includes: Hibernation execution unit 61, Execution activation unit 62 and Reception unit of hibernation instruction 63.

Reception unit of hibernation instruction 63 is used to receive hibernation instruction sent by the network side.

Hibernation execution unit 61 is used to turn off one or more hardware units and make STA enter hibernation mode when Reception unit of hibernation instruction 63 receives the hibernation instruction sent from network side.

Execution activation unit 62 is used to turn on all hardware units that have been turned off and make STA end its hibernation mode when STA receives the service instruction sent by network side or STA is about to send data to CAP on the network side.

Thus, the power-saving device on terminal side in present invention can turn off one or more hardware units of STA and make STA enter hibernation mode according to the hibernation instruction sent by the network side, meanwhile, it can end STA's hibernation mode in time when STA receives the service instruction sent by the network side or STA is about to send data to CAP on the network side, thus it can save power and the air interface resources by making STA in a state of its minimum power in a certain period.

The device on terminal side of this invention can be inside the STA or can locate in an independent part on the terminal side which is connected to STA.

The following lists some optional embodiments of the device on terminal side of this invention.

### Embodiment 5

Fig. 11 is a structure diagram of the terminal-side device that saves power in Embodiment 5 of present invention, wherein, the device includes: Hibernation execution unit71, Execution activation unit 72 and Hibernation request unit 73 and Reception unit of hibernation instruction 74.

Reception unit of hibernation instruction 74 is used to receive the hibernation instruction sent from the network side. Specifically it includes: Reception sub-unit of hibernation instruction 741 and Analytical sub-unit of hibernation instruction 742.

Reception sub-unit of hibernation instruction 741 is used to receive the hibernation instruction sent by the network side.

Analytical sub-unit of hibernation instruction 742 is used to analyze the authorized parameters carried in the hibernation instruction mentioned above.

Execution activation unit 72 is used to turn on all the hardware units that have been turned off in STA and make STA end its hibernation mode when STA receives the service instruction sent by the network side or STA is about to send data to CAP on the network side.

Hibernation request unit 73 is used to send the hibernation request to the network side, specifically, it includes: Determining sub-unit of hibernation parameters 731 and Sending sub-unit of hibernation request 732.

Determining sub-unit of hibernation parameters 731 is used to determine hibernation parameters that are to be reported.

Sending sub-unit of hibernation request 732 is used to send the hibernation request that carries the reported hibernation parameters to the network side.

Whether the reported hibernation parameters or the authorized hibernation parameters, both of them include: hibernation start time, initial hibernation window, monitoring window and change information of subsequent hibernation window that instructs the variation law of subsequent hibernation window.

Based on the specific contents included in the hibernation parameters above, the Hibernation execution unit 71 includes: Hibernation execution sub-unit 711 and Monitoring sub-unit 712.

Hibernation execution sub-unit 711 is used to turned off one or more hardware units of STA in each hibernation window mentioned above.

Monitoring sub-unit 712 is used to turn on the monitoring unit of STA in each monitoring window and make STA monitor the service instruction sent by the network side.

Optionally, the device showed in Fig.11 may also include: Confirmation unit, which is used to send ACK or GroupAck to the network side after the Reception unit of hibernation instruction 74 receives the hibernation instruction correctly.

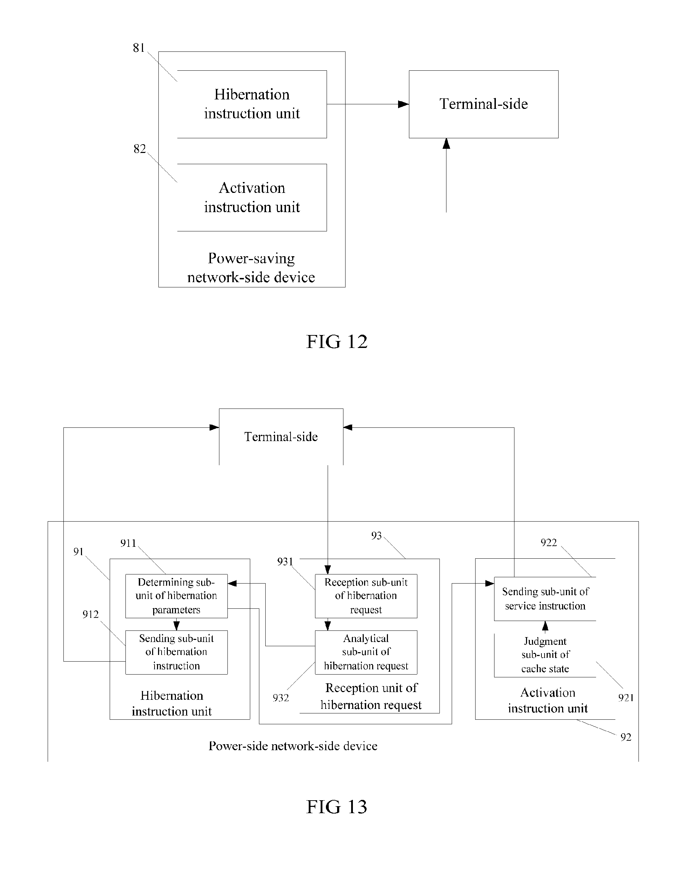

Fig.12 is a structure diagram of the network-side device that saves power in present invention, wherein, the device includes: Hibernation instruction unit 81 and Activation instruction unit 82.

Hibernation instruction unit 81 is used to send hibernation instruction to the terminal side.

Activation instruction unit 82 is used to send service instruction to the terminal side.

Thus, the network side device of each node in present invention can make STA on the terminal side enter hibernation mode by sending hibernation instruction to the terminal side, meanwhile, it can send service instruction to the terminal side and make STA on the terminal side end its hibernation mode, thus it can save power and the air interface resources by making STA in a state of its minimum power in a certain period.

The following lists some optional embodiments of the network side device in present invention.

The device on network side of this invention can be inside the CAP or can locate in an independent part on the network side which is connected to CAP.

### Embodiment 6

Fig.13 is a structure diagram of the network-side device that saves power in Embodiment 6 of present invention, wherein, the device includes: Hibernation instruction unit91, Activation instruction unit 92 and Reception unit of hibernation request 93.

Reception unit of hibernation request 93 is used to receive the hibernation request sent by the terminal side, specifically, it includes Reception sub-unit of hibernation request 931 and Analytical sub-unit of hibernation request 932.

Reception sub-unit of hibernation request 931 is used to receive the hibernation request sent by the terminal side.

Analytical sub-unit of hibernation request 932 is used to analyze the reported hibernation parameters carried in the hibernation request mentioned above.

Hibernation instruction unit 91 includes: Determining sub-unit of hibernation parameters 911 and Sending sub-unit of hibernation instruction 912.

Determining sub-unit of hibernation parameters 911 is used to determine the authorized hibernation parameters according to the reported hibernation parameters carried in the hibernation request. Here the method to determine authorized hibernation parameters is the same as what has been said in previous text.

Sending sub-unit of hibernation instruction 912 is used to send hibernation instruction that contain hibernation parameters to the terminal side.

Whether the reported hibernation parameters or the authorized hibernation parameters, both of them include: hibernation start time, initial hibernation window, monitoring window and change information of subsequent hibernation window that instructs the variation law of subsequent hibernation window.

Based on the specific contents of hibernation parameters, Activation instruction unit 92 is used to send service instruction to the terminal side when CAP has a transmission of service data to STA, specifically, it includes: Judgment sub-unit of cache state 921 and Sending sub-unit of service instruction 922.

Judgment sub-unit of cache state 921 is used to judge if the data sent from CAP cache to STA reaches the predetermined threshold.

Sending sub-unit of service instruction 922 is used to send service instruction in the nearest monitoring window to the network side when Judgment sub-unit of cache state 921judgesthat the data sent from CAP cache to STA reaches the predetermined threshold. Sending sub-unit of service instruction 922 obtains the authorized hibernation parameters from determining sub-unit of hibernation parameters 911 and then gets the information about monitoring window and etc.

Optionally, the device showed in Fig.13 may also include: Reception confirmation unit, which is used to receive ACK or GroupAck sent by the terminal side after it receives the said hibernation instruction correctly.

### Embodiment 7

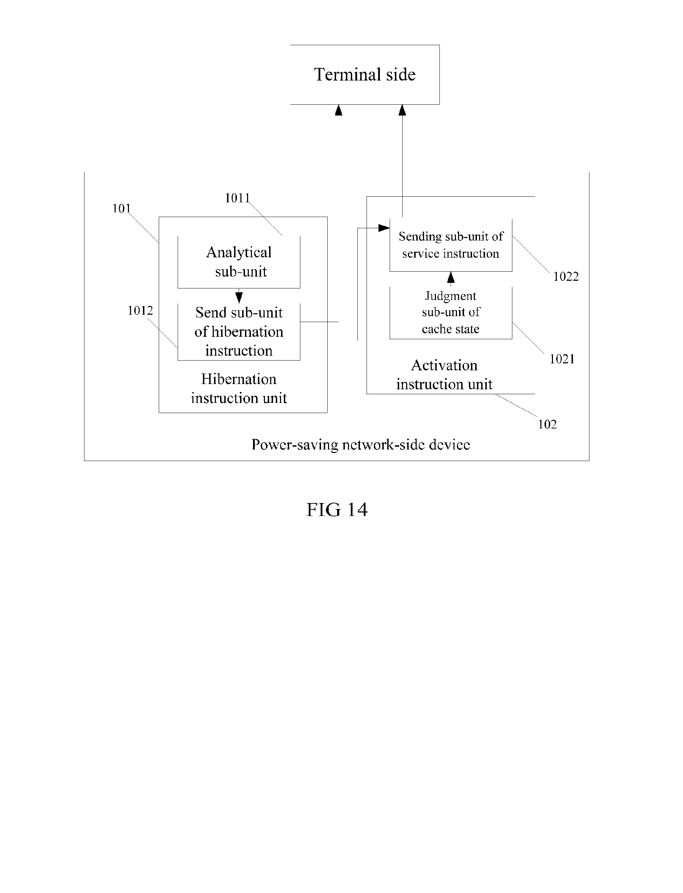

Fig.14 is a structure diagram of the network-side device that saves power in Embodiment 7 of present invention, wherein, the device includes: Hibernation instruction unit 101 and Activation instruction unit 102.

Hibernation instruction unit 101 includes: Analytical sub-unit 1011 and Send sub-unit of hibernation instruction 1012.

Analytical sub-unit 1011 is used analyze STA's current service conditions, system capacity and one or several items of system resources.

Send sub-unit of hibernation instruction 1012 is used to determine the authorized hibernation parameters according to the analytical results of Analytical sub-unit 1011 and send the hibernation instruction that carries authorized hibernation parameters. Here the method to determine authorized hibernation parameters is same as what has been said in previous text.

The authorized hibernation parameters said above are: hibernation start time, initial hibernation window, monitoring window and change information of subsequent hibernation window that instructs variation law of subsequent hibernation window.

Based on the specific contents of hibernation parameters, Activation instruction unit 102 is used to send service instruction to the terminal side when CAP has a transmission of service data to STA, specifically, it includes: Judgment sub-unit of cache state 1021 and Sending sub-unit of service instruction1022.

Judgment sub-unit of cache state 1021 is used to judge if the data sent from CAP cache to STA reaches the predetermined threshold.

Sending sub-unit of service instruction1022 is used to send service instruction in the nearest monitoring window to the network side when Judgment sub-unit of cache state 1021 judges that the data sent from CAP cache to STA reaches the predetermined threshold. Sending sub-unit of service instruction1022 obtains the authorized hibernation parameters from Sending unit of hibernation instruction 1012 and then gets the information about monitoring window and etc.

Optionally, the device showed in Fig.14 may also include: Reception confirmation unit, which is used to receive ACK or GroupAck sent by the terminal side after it receives the said hibernation instruction correctly. On this basis, Sending unit of hibernation instruction 1012 monitors the said reception confirmation units within the set frame number after sending the hibernation instruction, if the said reception confirmation units don't receive ACK or GroupAck sent by the terminal side, it can send the hibernation instruction again and again until reaching the set times, then it thinks the hibernation trigger process fails and it can start a new hibernation trigger process. If the number of times to continuously send hibernation instruction for the same STA exceeds the set times, then it thinks the STA is abnormal and this STA will be deleted from the activity list by triggering the device of activity list management.

The devices in Embodiment 6 and 7 can be integrated in one single device, wherein, the hibernation instruction unit would include all the parts said in Embodiment 6 and 7.

Besides the power-saving method and device said above, the present invention also provides three methods to save power.

The first power-saving method provided in the present invention includes: Generating a hibernation request; sending said hibernation request and making the receiving end which receives the hibernation request send hibernation instruction that instruct to enter the hibernation mode.

Further, the said hibernation request carries the reported hibernation parameters.

Further, the said hibernation request is encapsulated in the hibernation request frame. As an example, the frame structure of hibernation request frame here can be what is shown in Fig.3.

The second power-saving method provided in the present invention includes: Generating a hibernation instruction; sending said hibernation instruction and making the receiving end which receives the hibernation instruction turn off one or more hardware units and enter the hibernation mode.

Further, the said hibernation request carries the authorized hibernation parameters.

Further, the said hibernation instruction is a hibernation response frame. As an example, the frame structure of hibernation response frame here can be what is shown in Fig.4.

In the two methods said above, the said parameters are: hibernation start time, initial hibernation window, monitoring window and change information of subsequent hibernation window that instructs the variation law of subsequent hibernation window.

The third power-saving method provided in the present invention includes: Generating service instruction; sending said service instruction and making the receiving end which receives the service instruction turn on all the hardware units that have been turned off and end the hibernation mode.

Further, the said service instructions are encapsulated in the downlink service instruction frame. As an example, the frame structure of downlink service indication frame here can be what is shown in Fig.5.

It should be understood that the specific order or hierarchy of the steps in the process disclosed is only an example of the exemplary method. It should be understood that the specific order or hierarchy of the steps in the process may be re-arranged based on design preferences, without departing from the scope of the invention. The appended method claims provide various step factors in an exemplary order, but are not limited to the specific order or hierarchy.

In the above detailed description, various features are combined in a single embodiment for the sake of simplification of the disclosure. This disclosing manner should not be interpreted as reflecting such an intention that: the embodiment of the claimed subject requires more features than those stated clearly in each claim. On the contrary, as reflected in the appended claims, the invention may be in a state with less features than all features of a single disclosed embodiment. Therefore, the appended claims are hereby incorporated in the detailed description clearly, and each claim independently presents an individual preferred implementation solution of the invention.

The above description includes the examples of one or more embodiments. However, it is impossible to exhaust all potential combinations of the components and methods in describing the above embodiments, but it should be understood by one skilled in the art that components and methods of each embodiment may be further combined and arranged. Therefore, the embodiments described herein intend to contemplate all such changes, modifications and variations that fall into the scope of the appended claims. In addition, the term "comprise" used in the specification or the claims is similar to the term "include", just like the interpretation of the term "include" in the claims as a connection word. Additionally, any term "or" used in the claims or the specification intends to represent a "nonexclusive or".

## Claims

1. An power-saving method, **characterized in that**, this method comprising:
Receiving hibernation instruction transmitted by the network side, shutting down one or more hardware units of STA, making STA into hibernation mode;
When STA receives service instruction from said network side or STA is about to send data to CAP on the network side, all hardware units being turned off are turned on to allow STA to terminate the hibernation mode.

2. Method of claim 1, **characterized in that**, this method further comprising: sending hibernation request to the network side.

3. Method of claim 1, **characterized in that**, said hibernation request carries said reported hibernation parameters.

4. Method of claim 3, wherein, **characterized in that**, said hibernation request carries authorized hibernation parameters determined according to said reported hibernation parameters.

5. Method of claim 1, **characterized in that**, said hibernation instruction are determined by current service condition, system capacity and one or several items of system resources, and they carry said authorized hibernation parameters.

6. Method of Any one of claim 3 to claim 5, **characterized in that**, said hibernation parameters are: hibernation start time, initial hibernation window, monitoring window and change information of subsequent hibernation window that instructs variation law of subsequent hibernation window;
Said monitoring windows and the said hibernation windows are alternately set.

7. Method of claim 6, **characterized in that**, said hibernation start time instructs start timing of said initial hibernation window and it is represented with a frame number.

8. Method of claim 6, **characterized in that**, said hibernation mode comprising:
Turn off one or more said hardware units in each said hibernation window and turn on monitoring unit in each said monitoring window to make STA monitor said service instruction.

9. Method of claim 6, **characterized in that**, said service instruction is sent by the nearest window when the data sent from CAP cache to STA reaches predetermined threshold on network side.

10. Method of claim 1, **characterized in that**, further comprising:
After correctly receiving said hibernation instruction, acknowledgements is sent to the network side.

11. A power-save terminal-side device, **characterized in that** , said device comprising :
Reception unit of hibernation instruction, used for receiving hibernation instruction sent by network-side.
Hibernation execution unit, used for turning off one or more hardware units and make STA enter hibernation mode when Reception unit of hibernation instruction 63 receives hibernation instruction sent from the network side.
Execution activation unit, used for turning on all hardware units that have been turned off and make STA end its hibernation mode when STA receives service instruction sent by network side or STA is about to send data to CAP on network side.

12. Device of claim 11, **characterized in that**, said device further comprising:
Hibernation request unit, used for sending hibernation request to network side.

13. Device of claim 12, **characterized in that**, said hibernation request unit comprising:
Said hibernation request unit comprising:
Determining sub-unit of hibernation parameters, used for determining hibernation parameters that are to be reported;
Sending sub-unit of hibernation request, used for sending hibernation request that carries reported hibernation parameters to network side.

14. Device of claim 13, **characterized in that**, said Reception unit of hibernation instruction comprising:
Reception sub-unit of hibernation instruction, used for receiving hibernation instruction sent by the network side;
Analytical sub-unit of hibernation instruction, used for analyzing authorized parameters carried in the hibernation instruction mentioned above.

15. Device of claim 11, **characterized in that**, Said Reception unit of hibernation instruction comprising:
Reception sub-unit of hibernation instruction, used for receiving hibernation instruction sent by the network side;
Analytical sub-unit of hibernation instruction, used for analyzing authorized parameters carried in the hibernation instruction mentioned above.

16. Device of any one of claim 13-15, **characterized in that**, said hibernation parameters are: hibernation start time, initial hibernation window, monitoring window and change information of subsequent hibernation window that instructs variation law of subsequent hibernation window;
The said monitoring windows and the said hibernation windows are alternately set.

17. Device of claim 16, wherein, **characterized in that**, said hibernation start time instructs start timing of said initial hibernation window and it is represented with a frame number.

18. Device of claim 16, **characterized in that**,
Hibernation execution sub-unit, used for turning off one or more hardware units of STA in each hibernation window mentioned above;
Monitoring sub-unit, used for turning on monitoring unit of STA in each monitoring window and make STA monitor service instruction sent by network side.

19. Device of claim 11, **characterized in that**, said device further comprising:
Confirmation unit, used for sending acknowledgment message to network side after reception unit of hibernation instruction receives hibernation instruction correctly.

20. A power-save network -side device, **characterized in that**, said device comprising :
Hibernation instruction unit, used for sending hibernation instruction to terminal side;
Activation instruction unit, used for sending service instruction to terminal side.

21. Device of claim 20, **characterized in that**, said device further comprising:
Reception unit of hibernation request, used for receiving hibernation request sent by terminal side.

22. Device of claim 21, **characterized in that**, said Reception unit of hibernation instruction comprising:
Reception sub-unit of hibernation request, used for receiving hibernation request sent by the terminal side;
Analytical sub-unit of hibernation request, used for analyzing reported hibernation parameters carried in the hibernation request mentioned above.

23. Device of claim 22, **characterized in that**, Said Hibernation instruction unit comprising:
Determining sub-unit of hibernation parameters, used for determining authorized hibernation parameters according to the reported hibernation parameters carried in hibernation request;
Sending sub-unit of hibernation instruction, used for sending hibernation instruction that contain hibernation parameters to terminal side.

24. Device of claim 20, **characterized in that**, Said Hibernation instruction unit comprising:
Analytical sub-unit, used for analyzing STA's current service conditions, system capacity and one or several items of system resources.

25. Device of any one of claim 22-24, **characterized in that**, said hibernation parameters are: hibernation start time, initial hibernation window, monitoring window and change information of subsequent hibernation window that instructs the variation law of subsequent hibernation window;
Said monitoring windows and the said hibernation windows are alternately set.

26. Device of claim 25, wherein, **characterized in that**, said hibernation start time instructs start timing of said initial hibernation window and it is represented with a frame number.

27. Device of claim 25, **characterized in that**, Said Hibernation instruction unit comprising:
Judgment sub-unit of cache state, used for judging if data sent from CAP cache to STA reaches predetermined threshold.
Sending sub-unit of service instruction, used for sending service instruction in nearest monitoring window to network side when Judgment sub-unit of cache state judges that data sent from CAP cache to STA reaches predetermined threshold.

28. Device of claim 20, **characterized in that**, said device further comprising:
Reception confirmation unit, used for receiving acknowledgment message sent by terminal side after it receives said hibernation instruction correctly.
